# EUROPEAN PATENT APPLICATION

(11) **EP 2 014 705 A1**
(43) Date of publication of application: **14.01.2009**
(21) Application number: 07011300.6
(22) Date of filing: 08.06.2007
(51) Int. Cl.: C08K 3/34, C08K 7/00, C08L 23/02, B29C 55/00

(54) **Polyolefin formed objects and a method for manufacturing thereof**

(71) Applicant: Teijin Monofilament Germany GmbH, 86399 Bobingen (DE)
(72) Inventor: The designation of the inventor has not yet been filed
(74) Representative: Oberlein, Gerriet H. R.

(57) **Abstract**

A process for the manufacture of polyolefin formed objects, such as yarns, tapes or fibers, by meltextrusion and subsequent drawing of the objects is disclosed, wherein the objects are obtained from a polyolefin nanocomposite material and wherein the objects are drawn to a draw ratio of at least 20. Further, drawn polyolefine formed objects are described with a draw ratio of at least 20.

## Description

The invention pertains a process for the manufacture of polyolefin formed objects, such as yarns, tapes or fibers, by meltspinning and subsequent solid state drawing of the formed objects.

Such a process is well known in the art. For many applications good mechanical properties, in particular high tensile modulus and/or high tensile strength of the resulting polyolefin formed objects are desirable.

To obtain a higher tensile strength and/or a higher tensile modulus these formed objects are usually stretched (drawn). The degree of stretch results (typically) in macromolecular alignment. Therefore a higher degree of stretch (normally deemed the stretch or draw ratio), a greater exploitation of the macromolecular properties results. Hence a higher draw ratio intrinsically leads to higher mechanical properties.

It is well documented in the patent and the academic literature that the degree of stretchability or drawability of melt processed polyolefin's is limited. In isolation the longer the macromolecular chain the greater the extensibility. However, all polymers exist as entangled networks and there therefore becomes a trade-off between macromolecule length and the degree of network entanglements. In polyolefin's it is the degree of entanglements that provides this physical drawability limit.

The high degree of elongational and shear flow produced during drawing will typically lead to failure at defects in the precursor material. The addition of fillers into drawn objects usually leads to failure in the drawing process and an inability to reach the modulus and strenght properties of the mono material.

It has now been found that the object of the invention can be achieved by obtained the formed objects from a polyolefin nanocomposite material and by drawing the objects to a draw ratio of at least 20, preferably at least 25.

The present invention provides a process to produce oriented tapes, yarns or fibres by melt spinning and subsequent solid state drawing containing filler. The addition of this filler, contrary to popular understanding and thus surprisingly increases the drawability (stretchability) of the base polyolefin resin. This increase in draw ratio is met with a corresponding increase in mechanical properties as described by Irvine and Smith [Irvine P, Smith, P. Development of the axial Young's modulus with draw ratio of flexible-chain polymers. Macromolecules 1986, 19, 240] in the academic literature.

Polyolefin nanocomposite materials as such are known in the art. From WO 2006/131450 it is also known to spin such a material to fibers. However, nothing is said about drawing these fibers, let alone drawing them to draw ratios exceeding 20. WO 2006/131450 only discloses that stretchability does not get worse.

Also WO 2004/041721 discloses spinning of polyolefin nanocomposites to an extremely wide variety of forms, e.g. in the form of films, fibres, tapes moulding component or profiles. But again WO 2004/041721 is silent about the draw ratios according to this invention.

As a matter of fact, the polyolefin nanocomposite material is a dispersion of the nanoparticles in the polyolefin matrix. The better the degree of dispersion of the nanoparticles throughout the melt, the higher is the achievable draw ratio.

Of interest for the process according to the invention is a polyolefin nanocomposite, wherein the nanoparticles are from the natural or synthetic phyllosilicate type or a mixture of such phyllosilicates or a layered hydroxy carbonate. Preferably, the nanoparticles are layered silicate clays or layered hydroxycarbonates. Even more preferred for the polyolefin nanocomposites, are nanoparticles selected from the group comprising montmorillonite, bentonite, beidellite, mica, hectorite, saponite, nontronite, sauco nite, vermiculite, ledikite, magadite, kenyaite, stevensite, volkonskoite, hydrotalcite or a mixture thereof.

For the process according to the invention it is preferred that the nanoparticles applied are nanoclay platelets. Such platelets have a length to thickness ratio in the order of 100 to 200, whereas the thickness usually does not exceed 1 to 2 nm. The addition to and subsequent dispersion in the polyolefin matrix of these nanoclay platelets surprisingly leads to the very high draw ratio and linked improved mechanical properties of the polyolefin shaped objects.

It turned out that the process of the invention could be carried out very successfully if as nanoparticles montmorillonite nanoclay platelets are applied. Possibly the montmorillonite nanoclay platelets exhibit dimensions that render them particularly suitable both for preparing a good dispersion in the polyolefin matrix and for stretching the nanocomposite to high draw ratios.

The amount of nanoparticles in the polyolefin nanocomposite are preferably in the range 1 to 10 wt.-%, even more preferred between 2 and 5 wt.-%, with respect to the polyolefin.

With polypropylene as matrix material an increase of the tensile modulus from about 1.2 GPa to about 1.5 GPa can be achieved using these concentration ranges.
Further, with an amount of 2.5 wt.-% montmorillonite in polypropylene a draw ratio up to 30 could be obtained. Additionally, the thermal decomposition temperature of such a system increases by about 45 °C.

Although the type of polyolefin to be applied is not restricted to particular polyolefins, it is, however, preferred for the process of the invention that the polyolefin is selected from a group consisting of polypropylene, polyethylene, polybutylene and/or blends thereof.

The invention further is directed to a drawn polyolefin formed object, such as a yarn, a tape or a fiber, wherein the polyolefin formed object comprises nanoparticles and exhibits a draw ratio of at least 20, preferably of at least 25.

It is preferred for the polyolefin formed objects that they comprise nanoclay platelets as nanoparticles and more preferably montmorillonite nanoclay platelets.

The polyolefin formed objects comprise an amount of nanoparticles in a range from 1 to 10 wt.-% with respect to the polyolefin.

The polyolefin preferably is selected from a group consisting of polypropylene, polyethylene, polybutylene and/or blends thereof with polypropylene as the most preferred one.

Furthermore, it is preferred if the polyolefin formed objects are drawn monofilaments or multifilament yarns, in particular filaments comprising polypropylene.

Undrawn yarns are of low strength and almost any extrudable thermoplastic can be made into an undrawn filament (as long as any particle can fit through the spinneret). A drawn filament is very different. Here a post extrusion process is employed to align the polymer chains in the direction of deformation. Drawn filaments have other mechanical properties than their undrawn counterparts. The drawing process also means that any poorly dispersed particle will undoubtedly lead to filament failure.

## Claims

1. Process for the manufacture of polyolefin formed objects, such as yarns, tapes or fibers, by meltextrusion and subsequent drawing of the objects, **characterized in that** the objects are obtained from a polyolefin nanocomposite material and that the objects are drawn to a draw ratio of at least 20.

2. The process according to claim 1, **characterized in that** the draw ratio is at least 25.

3. The process of any of the preceding claims, **characterized in that** the polyolefin nanocomposite material comprises nanoparticles dispersed in a polyolefin matrix.

4. The process of claim 3, **characterized in that** as nanoparticles nanoclay platelets are used.

5. The process of 4, **characterized in that** as nanoparticles montmorillonite nanoclay platelets are used.

6. The process of any of the preceding claims, **characterized in that** the amount of nanoparticles in the polyolefin nanocomposite material ranges from 1 to 10 wt.-% with respect to the polyolefin.

7. The process of any of the preceding claims, **characterized in that** the polyolefin is selected from a group consisting of polypropylene, polyethylene, polybutylene and/or blends thereof.

8. A drawn polyolefin formed object, such as a yarn, a tape or a fiber, **characterized in that** the polyolefin formed object comprises nanoparticles and exhibits a draw ratio of at least 20, preferably of at least 25.

9. The polyolefin formed object of claim 8, **characterized in that** the polyolefin formed object comprises nanoclay platelets as nanoparticles.

10. The polyolefin formed object of claim 9, **characterized in that** the polyolefin formed object comprises montmorillonite nanoclay platelets as nanoparticles.

11. The polyolefin formed object of claims 8 to 10, **characterized in that** the amount of nanoparticles in the polyolefin formed object ranges from 1 to 10 wt.-% with respect to the polyolefin.

12. The polyolefin formed object of any of the claims 8 to 11, **characterized in that** the polyolefin is selected from a group consisting of polypropylene, polyethylene, polybutylene and/or blends thereof.

13. The polyolefin formed object of claim 12, **characterized in that** the formed object is a drawn monofilament or multifilament yarn.
